# EUROPEAN PATENT APPLICATION

(11) **EP 2 003 429 A2**
(43) Date of publication of application: **17.12.2008**
(21) Application number: 08251987.7
(22) Date of filing: 07.06.2008
(51) Int. Cl.: G01H 1/00

(54) **Vibration sensor**

(30) Priority: 16.06.2007 GB 0711687
(71) Applicant: Real Edge Limited, Awsworth Nottinghamshire NG16 2QT (GB)
(72) Inventor: Swan, Michael, Awsworth Nottinghamshire NG16 2QT (GB)
(74) Representative: Parnham, Kevin

(57) **Abstract**

A monitoring device comprising a vibration sensor, a mounting and a control device, the vibration sensor positioned in use upon vibrating equipment using the mounting to provide a vibration characteristic for the equipment in use, the mounting configured to define a vibration conduit between the equipment and the vibration sensor, the vibration sensor providing a response signal indicative of vibrations above a threshold for the vibration characteristic, the control device including a memory and a processor, the memory defining a trigger value for an actuation trigger to a display and the processor arranged to monitor the response signals and compare with the trigger value such that the processor stimulates the actuation trigger to the display to provide an indicator.

## Description

The present invention relates to monitors for vibrating equipment and more particularly to a monitor for use with regard to small garden or power plant equipment such as lawn mowers and portable generators as well as drills and other power tools (hydraulic/pneumatic/electrical/motor driven) which create vibrations indicative of use.

In view of their convenience a large number of machines and tools such as lawn mowers, portable electrical power generators and other tools utilise small internal combustion engines as a prime mover or hydraulic or pneumatic or electrical power sources. These tools and machines are mass produced and so are relatively cheap enabling extensive usage. As with any engine its reliability and performance are dependent upon the degree of maintenance provided. Furthermore, adequate maintenance of small internal combustion engines improves their emissions performance.

A further important consideration is with regard to power tools whether driven by motors or engines or hydraulically or pneumatically or through electrical actuators is the vibration of such tools. It will be appreciated particularly with regard to professional users of power tools there is increasing concern that vibration can result in temporary and permanent damage to a user's hands and other functions. Ailments known as white finger and Reynolds disease are known to be caused by power tool vibration and in such circumstances it is important to measure exposure to such vibrations.

Unfortunately, in view of the nature of particularly lawn mower operation it will be understood that engine maintenance is generally not given sufficient attention. In a domestic environment machinery such as lawn mowers will only be sporadically utilised and therefore users of such machinery may ignore manufacturer's maintenance schedules. For industrial operations such as with regard to municipal authorities there is a desire to maintain gardening equipment including internal combustion engines but there may be a number of users so there will be a need for a logbook which may add considerably to administrative tasks for personnel not necessarily skilled in such matters.

With regard to power tools inherently users of such tools are averse to locking usage in view of the tedium of such administrative tasks and furthermore different power tools dependent upon particular jobs to be performed may produce significantly different vibration exposure levels.

In view of the above provision of monitors for vibration equipment whether they be domestic lawn mowers or other equipment or powered tools or plant would be desirable and such monitors of vibration should be able to provide an easy indication of usage which although informative need not necessarily be overly accurate, that is to say accurate to a sufficient degree but not exactly precise.

With regard to more expensive equipment such as automobiles it will be understood that sophisticated engine management systems and tachographs including mileometers are generally provided to give reminders as to maintenance scheduling. Furthermore in view of manufacturer's warranties generally being tied to an appropriate maintenance schedule and in view of the cost of such equipment users and owners have incentives to appropriately maintain the internal combustion engine. Such high cost engine management regimes would not be acceptable with regard to relatively low cost machinery such as lawn mowers and portable electrical power generators.

In accordance with aspects of the present invention there is provided a monitoring device comprising a vibration sensor, a mounting and a control device, the vibration sensor positioned in use upon vibrating equipment using the mounting to provide a vibration characteristic for the equipment in use, the mounting configured to define a vibration conduit between the equipment and the vibration sensor, the vibration sensor providing a response signal indicative of vibrations above a threshold for the vibration characteristic, the control device including a memory and a processor, the memory defining a trigger value for an actuation trigger to a display and the processor arranged to monitor the response signals and compare with the trigger value such that the processor stimulates the actuation trigger to the display to provide an indicator.

Possibly, the vibrating equipment is an engine or power tool (hydraulic or pneumatic or electrical motor driven).

Generally, the indicator relates to a length of time or usage threshold. Possibly the length of time of usage threshold varies dependent upon the intensity of vibration.

Typically, the processor includes a clock or timer incremented or activated by the response signal and the trigger value is a time period. Alternatively, the processor is arranged to count the number of response signals representative of vibration above the threshold and the trigger value is an accumulative number of response signals.

Generally, the indicator comprises an icon panel. Generally, the memory defines a plurality of trigger values and the display operates an indicator for each trigger value. Typically, the trigger value relates to an indicator for oil change and/or service overhaul and/or other functional aspects of the engine. Possibly, the indicator provides an indication that usage of the equipment should cease.

Possibly, the mounting and/or vibration sensor includes means for adjusting vibration sensitivity. Advantageously, the control device is associated with a calibration feature whereby the vibration characteristic is set when a machine associated with the monitoring device is operational. Possibly, the indicator indicates vibrations are received by the control device such that a user can note such false vibrations when a machine associated with a monitoring device is non-operational and therefore adjust the sensitivity of the vibration sensor and/or the mounting defining the vibration conduit to reduce or eliminate vibrations when the machine associated with the monitoring device is non-operational.

Possibly, the monitoring device is associated with a temperature sensor whereby the control device is only operational when a pre-determined temperature is exceeded. Possibly, the vibration characteristic is set when the temperature sensor exceeds a pre-determined temperature.

Possibly, the trigger value is electively variable by a user. Possibly, the trigger value can be chosen for levels of expected service namely, light domestic duty, heavy domestic duty or industrial use. Possibly, the trigger value is variable dependent upon determination or extent of continuous use and/or periods of inactivity and/or other trigger values utilised in the monitoring device. Advantageously, the trigger value can be set for an individual user of the equipment or for individual equipment. Generally, the trigger value is accumulative for separate periods of usage.

Generally, the mounting includes an elastic damping layer. Typically the thickness and/or shape and/or material chosen for the mounting is arranged to provide the vibration characteristic.

Possibly, the mounting is specifically variable in order to alter the vibration characteristic to set a threshold for the vibration sensor specific to the monitoring device installation. Possibly, the mounting is variable by insertion or removal of insert elements. Possibly, the mounting is variable by incorporation of microencapsulated adhesive released by vibration of the mounting. Possibly, the mounting is variable by comprising frangible elements and/or variable compressability and/or shaping in situ. Possibly, the mounting is variable by provision of straps to vary the proximity of the vibration sensor to the machine. Possibly, the mounting incorporates a glove or sleeve to envelop the mounting device for protection and/or to vary the vibration characteristic.

Possibly, the indicator comprises an icon associated with a necessary maintenance or repair function for the machine or equipment.

Typically, the trigger value is associated with an expected number of vibrations for the machine when operated for a period of time. For example, a number of vibrations for operation for 5 hours indicative of a desirable need for an oil change and/or the number of vibrations associated with operation for 100 hours indicative of a need for general overhaul and maintenance.

Typically the vibration sensor may be any suitable vibration sensor but is preferably a piezoelectric vibration sensor. In general, the vibration sensor may be any device capable of generating electrical output in response to vibration of the vibration device. A piezoelectric vibration sensor, for instance, may comprise a piezoelectric element which is fixed at one end. Vibration of the piezoelectric element creates mechanical stress that induces an electrical current.

The timer preferably monitors the total equipment runtime since manufacture of the device. Where the device is fitted to equipment such as an engine or machine that is unused since manufacture, the timer means may therefore monitor the total engine runtime since manufacture of that engine. Alternatively, the timer means may be resettable such that the timer means monitors the total engine runtime since the last reset of the timer means. In either case, however, the device may be used to ensure that maintenance is carried out at regular intervals of engine runtime, or in accordance with a maintenance schedule which may be provided by the engine manufacturer the device preferably comprises means for displaying the total equipment runtime to the user. Most preferably, such means comprises an electronic display that is operably linked to the timer means such that the total engine runtime is displayed for the user. The total engine runtime is preferably displayed in terms of standard time units, and most preferably in terms of hours. The electronic display is preferably an LCD display or the like.

In order to further facilitate, and also encourage, adherence to a maintenance schedule or to limit exposure to vibration by an individual user, the device preferably includes means for storing a maintenance or usage schedule which comprises a series of maintenance or user actions, each accompanied by the *total* equipment runtime at which the action is due or operation should cease. The maintenance schedule and/or action next due may simply be displayed to the user alongside the total equipment runtime, either as accumulated over a number of usages of the equipment or a current usage session.

Most preferably, the device includes means for comparing the total equipment runtime to the maintenance schedule, and means for communicating to the user that a maintenance action or other action is due. The means for communicating to the user that a maintenance action or other action is due may comprise an audible or visual indicator. The device according to the invention may be adapted to only communicate to the user that a maintenance action or other action is due, and not display the total equipment runtime.

Most preferably, however, the means for displaying the total equipment runtime to the user is also adapted to display indicators that communicate to the user that a maintenance action or other action is due. Such indicators may take the form of explanatory text, or explanatory icons, for example. Most preferably, the device includes a control switch operably linked to the display means such that the indicators may be cleared when the associated maintenance or other action has been carried out. Indicators associated with maintenance actions that require the user to return the machine or engine to an authorised dealer, such as the requirement for a full service, are preferably only clearable by an authorised dealer.

The timer means, the means for storing a maintenance or usage schedule, and the means for comparing the total equipment runtime to the maintenance schedule, all preferably form part of a central processor. Most preferably, the central processor is an integrated circuit. Such a circuit may readily be designed by those skilled in the art.

The device according to the invention preferably incorporates a suitable power supply, most preferably one or more dry cell batteries. Alternatively, the device may draw power from the equipment to which it is fitted.

According to a further aspect of the invention, there is provided equipment subject to vibration in use and a device according to the invention, as described above.

Also in accordance with aspects of the present invention there is provided a monitoring device comprising a vibration sensor, a mounting and a control device, the vibration sensor positioned in use above a machine using the mounting to provide a vibration characteristic for the machine in use, the mounting configured to define a vibration conduit between the machine and the vibration sensor, the vibration sensor providing a response signal to a timer, the operation sensor arranged to preferentially detect vibrations with the vibration characteristic for the machine and provide the response signal to the timing device whereby the time the machine is in use is determined, the mounting adjustable to vary the vibration characteristic as determined by the vibration sensor to ensure the vibration sensor predominantly determines vibrations with the vibration characteristic in order to provide the response signal.

Typically, the vibration sensor incorporates a filter and simply acts when receiving vibrations with the vibration characteristic determined by the mounting.

Aspects of the present invention will now be described by way of example only and with reference to the accompanying drawings in which:
Figure 1 is an illustration of a monitoring device in accordance with a first aspect of the present invention;
Figure 2 is a schematic illustration of a monitoring device assembled to equipment subject to vibration such as an engine in accordance with a second aspect of the present invention;
Figure 3 is a schematic exploded view of a monitor device in accordance with aspects of the present invention;
Figure 4 is flow chart illustrating operation of a monitoring device in accordance with aspects of the present invention;
Figure 5 provides illustrations of some possible vibration characterisation processes;
Figure 6 illustrates a monitor in accordance with first aspects of the present invention;
Figure 7 illustrates a monitor in accordance with second aspects of the present invention; and,
Figure 8 illustrates a monitor in accordance with third aspects of the present invention.

As indicated above monitoring of relatively inexpensive internal combustion engines or equipment such as power tools subject to vibration to provide rudimentary indications as to service intervals maintenance operations and user exposure would be advantageous. However, the cost of traditional monitoring devices relative to the value of the machinery in which the internal combustion engine or other source of vibration is located is generally too high. Furthermore, logging and recording, particular of individual user records of exposure to vibration or to stay within acceptable exposure limits per day or other time period, is difficult and tedious. It will be understood that highly accurate determinations of periods for repair, maintenance and exposure with regard to equipment subject to vibration such engines is not required but the nature of use of such machines eg lawn mowers and power tools means that simple vibration detectors to trigger a timer or simple vibration counting techniques are not acceptable. It will be understood that such devices as lawn mowers, power tools and portable generators may be transported in the back of vehicles such that there is vibration during transportation or dragging such equipment across gravel or uneven ground. Such vibrations may trigger a timer or a vibration counter leading to erroneous results. Inaccuracy to a relatively high level of plus or minus 20% may be acceptable but if there is erroneous triggering of the timer or the vibration pulse counter may operate more often in an erroneous mode that is to say during vehicle transportation than when the actual equipment associated with the monitor is in use the effectiveness of the monitor is diminished. The monitor device would be ineffective. Clearly, the obvious solution is to provide electronic filtering but such electronic filtering generally is the cause of the relatively high costs for traditional vibration monitoring devices.

A further problem with regard to particularly power tools is that individual power tools may have different vibration characteristics and vibration intensities. There is a wide range of equipment subject to vibration which may cause health problems for a user subject to prolonged or intensive exposure to such vibration equipment. As indicated above vibration equipment includes power tools such as pneumatic drills, hydraulic hammers, power presses and other industrial or manufacturing tools. Although exposure to vibration is a known problem and increasingly there is legislation which limits exposure of particular users over fixed time periods such as a day or otherwise. It is difficult to regulate in terms of logging and recording such usage conveniently enough for most users. Ideally a simple display in terms of coloured indicators typically in the form of LED lights would be advisable. Consequently, in accordance with aspects of the present invention it is envisaged that particular equipment subject to vibration and to which users may be exposed will initially be assessed in terms of its vibration characteristics and given effectively a points system with respect to vibration exposure risk. As will be described later a points threshold will then be established for intensity in terms of rates of points indicative of vibration over a short time period and then exposure over a longer time period such that users can consequently take necessary action.

As indicated above aspects of the present invention are particularly dependent upon definition of characteristic vibration for equipment subject to vibration. As indicated above high levels of accuracy with regard to timings are less important than determining usage of the equipment subject to vibration as an indicator as to necessary maintenance functions or in order to provide an indication with respect to user exposure to vibration. Aspects of the present invention in such circumstances depend upon a rudimentary sensor for vibration determination and then through use of mountings achieving vibration characterisation as an effective selector of vibration for determination of thresholds which are then used for providing icon or other indicator definitions for ready understanding by a user. Typically time periods are utilised as the thresholds for triggering indicator operation such as elimination of an LED light or otherwise. The actual time period may vary dependent upon the intensity of vibration. In such circumstances an initial calibration process may be determined as to the intensity of vibration under certain conditions. With a power tool for example operation of that power tool such as a pneumatic hammer may create different vibration responses when that hydraulic hammer engages tarmac in comparison with concrete or stone. These vibration characterisations can then be translated into threshold time periods before indicators of unacceptable exposure are eliminated.

It is proposed to translate acceptable exposure thresholds determined by legislation and appropriate authorities such as the UK Health and Safety Executive into a points based threshold system. In such circumstances an absolute exposure limit may be determined in the form of a number of points such as 400 points and in such circumstances if that exposure limit is exceeded during a fixed period such as a working shift or day one particular indicator such as an LED will flash to warn a user as to the acceptable usage exposure limit being exceeded. However, such an approach will also allow ongoing monitoring of the level of vibration intensity such that for example if a hundred points are collated over a shorter period of time or consistently over a time period then high level vibration intensity will be determined and a warning indicator provided to a user.

As indicated above it is vibration characterisation which is achieved by appropriate choice of vibration/motion sensitivity adjusted through mounting configuration which provides advantages in accordance with aspects of the present invention. By the mounting the responsiveness of the vibration sensor can be adjusted in terms of sensitivity and therefore periods of time when that vibration sensor determines vibration through the mounting can equate to certain levels of vibration intensity. If a number of vibration sensors either in individual monitors or built into the same monitor chassis are utilised these monitors can be configured to provide certain responsiveness levels to various levels of vibration intensity and therefore each monitor as indicated provide an individual as well as potentially cross-related results for determining threshold levels as triggers for indicators.

Generally a basic indicator will provide a clock and a basic run time indicator for equipment subject to vibration. The vibration acts as an indicator of usage and exposure. In such circumstances a basic level of monitoring is achieved which can be utilised as indicated for maintenance scheduling as well as indicators of exposure. Generally the indicators will be configured to provide responsiveness such that as indicated indicators can provide an ongoing indication as to the level of vibration intensity as a warning to a user and then if that intensity continues for a time period a final indicator that an exposure limit has been exceeded.

It is expected that particularly with regard to commercially utilised power tools each tool or tool type will have individual vibration characteristics calibrated by an appropriate authority. This authority may be a legislative authority or owners of the equipment. In such circumstances the monitor in accordance with aspects of the present invention may be attached to the equipment subject to vibration through straps which have a security fitting such that the monitor cannot be removed or altered once the vibration characteristic has been set upon the mountings. Thus the legislative authority and/or owners of the equipment can ensure that their operators remain within set instruction levels by simply looking at the indicators during the working day and at the end of the working day. Furthermore, it may be possible to provide a monitor which once a threshold limit has been reached for exposure effectively renders the equipment subject to vibration inoperative until reset. Such an approach will again provide greater control to ensure that users do not exceed tolerable exposure limits or equipment is not operated beyond acceptable maintenance periods.

A further modification to a monitor in accordance with aspects of the present invention may relate to providing individual identification of users. In such circumstances prior to use of equipment subject to vibration an individual user will need to specify their identity through a unique code or other indicator. In such circumstances the monitor will then recall previous usage of the equipment subject to vibration and therefore tailor the threshold before indicators are triggered dependent on that previous exposure or usage. Such an approach will also provide a tool by which exposure to vibration may be spread amongst a gang of users more proportionately and therefore reduce risks to individual members of that gang.

Monitors in accordance with aspects of the present invention may be operated to provide indicators with regard to particular user exposure to vibration but also to provide indications as to maintenance of the equipment subject to vibration. Such dual utility may have particular advantages in terms of reducing overall cost and acceptability of monitors in accordance with aspects of the present invention.

Clearly, notice of the indicator utilised in a monitor in accordance with aspects of the present invention is important. Particularly when utilised with respect to exposure limits for individuals it may be advantageous to provide a blatant or open indicator. This may render a colour change to the whole casing of the monitor utilising electricity generated by piezo electric effects such that a user will clearly see that a threshold has been reached. Alternatively, a wired or wireless link may be provided to a lapel secured badge which provides an indication eg colour change as an indictor to a user with respect to threshold limits with regard to vibration usage and in particular exposure.

Aspects of the present invention provide a simple icon based monitor device. The monitoring device incorporates at least one icon which may show a symbolic oil can or spanner or other symbol indicative of a procedure required including ceasing to use. It will be understood an oil can would indicate an oil change is required, a spanner would indicate a general overhaul is required, a spark plug symbol that the spark plug should be replace, an air filter that the air filter should be replaced, and possibly a question mark symbol could be utilised to indicate the lawn mower should be returned to the distributor or manufacturer. By providing simple iconograph indicators it will be appreciated that essentially notional levels of time or vibration pulse counts can be set to cause illumination of these icons. Furthermore relativity between the levels established for each icon illumination can be determined. Thus, if an oil change is required after 5 hours and a general overhaul after 100 hours then by self-adjustment the vibration count or time (expected date) period for the engine to reach the oil change threshold can simply be doubled to determine an adjusted threshold for engine overhaul criteria as usage patterns may not change. In such circumstances the specific individual usage of the machine in terms of probably erroneous activation can be cancelled out for the more important engine maintenance indicator relative to the oil change indicator.

Aspects of the present invention particularly relate to configuring an engine monitor to have if possible a distinct vibration characteristic to act as a trigger for a timer or a vibration counter which can be distinguished from erroneous vibrations as a result of transportation or non-operational movement of the machinery across gravel etc. As will be described below such attempts to provide vibration characterisation relate to positioning of the monitoring device, provision of adaptable mountings and consideration and possible elimination of erroneous vibration initiators.

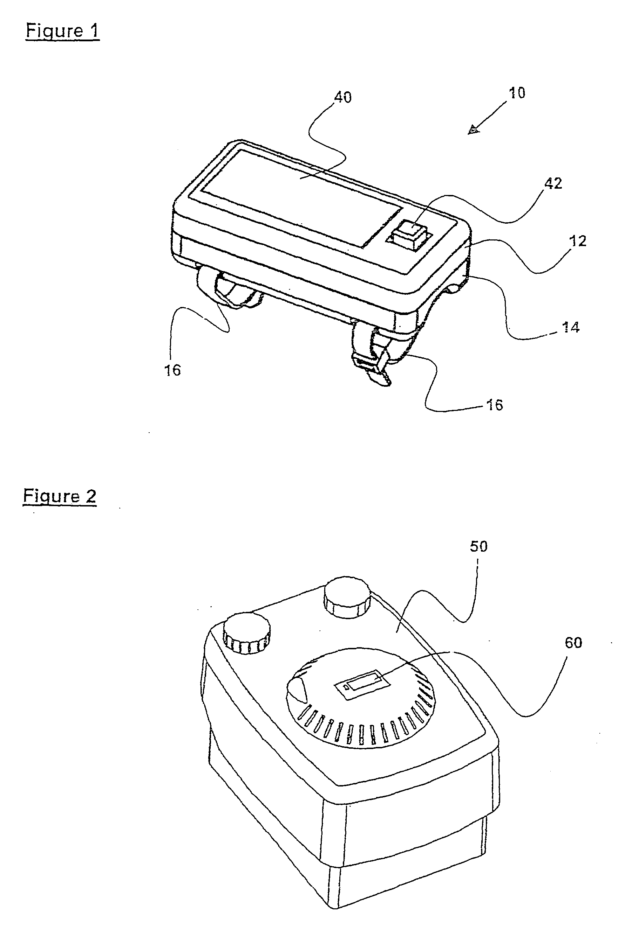

Before providing greater detail with regard to aspects of the present invention reference is made to Figures 1 to 3 as illustrations of general vibration monitor device configurations in accordance with aspects of the present invention.

Figure 1 provides a schematic perspective view of a monitoring device 10 in accordance with first aspects of the present invention. The device 10 comprises a generally sealed container formed by respective housing elements 12, 14 secured together to define a container for a vibration detector and necessary electronics to drive a display 40. The device 10 incorporates a button or switch 42 which as will be described later can be utilised for specific operation in order to improve monitoring capabilities. The device 10 is secured through straps 16 and in the configuration depicted in Figure 1. The device 10 is arranged such that it can be secured to the handlebars of a machine such as a lawnmower or handle. In accordance with aspects of the present invention depicted this is through provision of the straps 16 and in the general mounting of the device 10 attempts are made to provide characterisation with regard to the vibration activating monitor timings.

Figure 2 illustrates an alternative configuration of a monitoring device in accordance with aspects of the present invention in which a monitoring device 60 is located directly within a housing 54 of an internal combustion engine as an example of equipment which creates vibrations in use. Again the monitor 60 operates by association with the housing 50 in terms of providing a vibration characteristic which can be distinguished from spurious vibrations in order to trigger a timer clock or vibration pulse counter. By appropriate choice of mountings for the device 60 such vibration characterisation can be achieved.

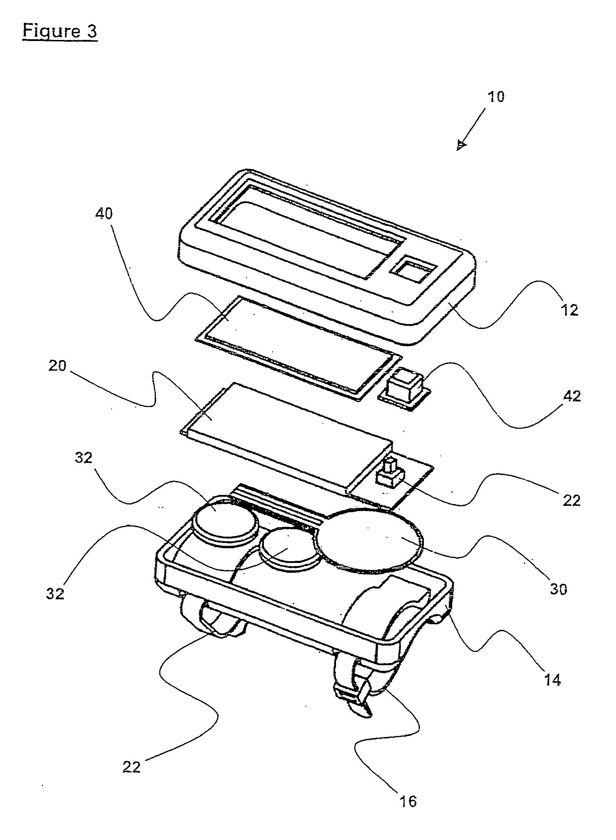

For illustration purposes Figure 3 provides an exploded view of elements of the device 10 depicted in Figure 1. As indicated previously the monitoring device 10 comprises a casing formed by housing parts 12, 14 typically produced by plastic mouldings. The housing parts 12, 14 enclose the elements of the monitoring device 10 and allow the device 10 to be secured to any part of the machine such as an internal combustion engine or handles for that machine. Some parts of the housing 14 are generally shaped as will be described later to be associated with mounting elements in order to provide a vibration characteristic. Typically a longitudinal channel is defined which has a cross section to provide the mountings and for positioning of other elements to enable location of the device 10.

Device 10 as indicated above is secured through straps 16 which generally extend from the casing formed by parts 12, 14. Each strap 16 acts in a usual manner in order to secure the device. Thus, the straps. 16 may have buckle ends or provide fastening through zip ties.

Within the monitoring device an integrated circuit 20 is provided along with a switch 22 acts in association with a motion sensor 30 and batteries 32 in order to provide a monitoring function in accordance with aspects of the present invention. The batteries are typically of a pill type and as will be appreciated are arranged to provide power to the integrated circuit 20. The control switch 22 is utilised to control the monitoring function of the device 10 and in order to provide an environmental seal is typically covered by an elastomeric button 42. As described previously a display 40 is positioned across an aperture in an external surface of the casing 12 so that set icons can be displayed.

In terms of operation the motion sensor is typically a piezoelectric motion sensor capable of sensing vibrations over a range of frequencies. The motion sensor in such circumstances can identify vibrations caused by the machine and in particular the internal combustion engine as well as other vibrations. When the motion sensor 30 senses vibrations it outputs a response signal to the integrated circuit 20. This signal is typically representative of the output and/or frequency of the sensed vibrations.

A general configuration for device 10 described above is such that the motion sensor as indicated will provide a response signal to stimulate a timer device or allow vibration pulses to be counted. Clearly, once the motion sensor determines lack of vibrations then the response signal or signals for the timer device will be removed and the timer or count therefore stopped.

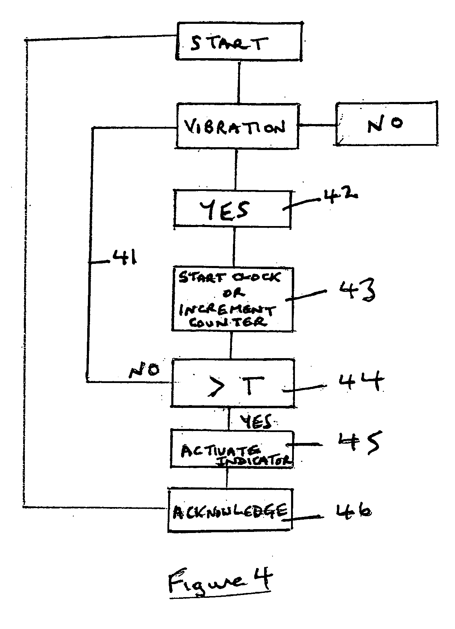

Figure 4 provides a schematic flow chart illustrating possible operational stages with regard to a monitoring device in accordance with aspects of the present invention. Initially the device is rendered operative at a start stage such that subsequent to that stage if vibration is determined though a yes path a timer is activated or a pulse counter initiated for incrementation. Throughout the period that vibration is detected the timer or counter continues to operate until a response exceeds a trigger time or vibration pulse count T. Discontinuing operation of the timer or vibration counter is provided by a return loop 41 including the vibration determination or continuing test 42 incrementing or continuing operation of the timer 43 and comparison with the timer or count threshold T at a stage 44. Once the timing or vibration count threshold trigger T has been exceeded a signal is provided to initiate activation of an indicator 45. Continued activation of the indicator 45 is continued until acknowledged at stage 46 and the procedure re-initiated.

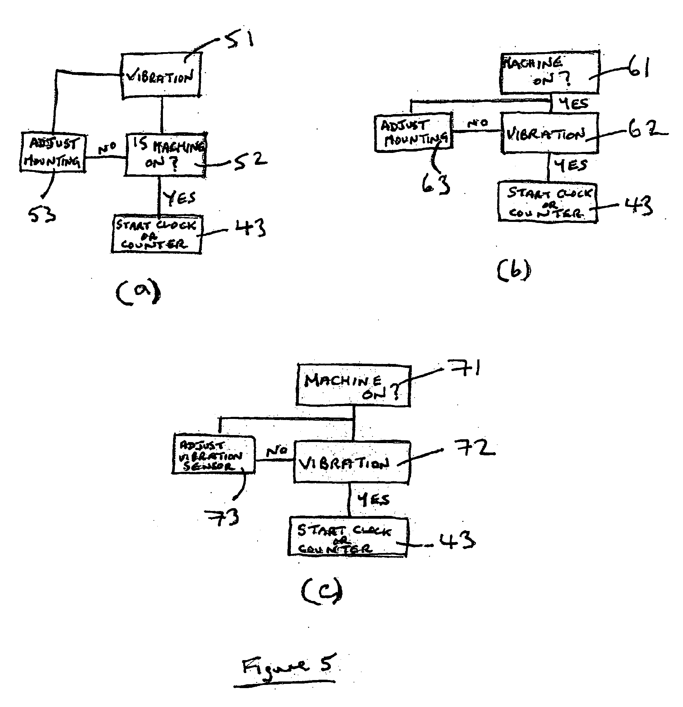

In accordance with aspects of the present invention as indicated the known simply "yes" vibration check to activate a timer or vibration pulse counter processes is augment through vibration characterisation. This vibration characterisation is generally provided through mountings for the device. However, in addition to the mountings during initial calibration stages further processes can be provided. These processes are typically initiated through use of the control button 22 as described above. Some of the vibration characterisation processes for calibration are outlined in flow charts depicted in Figure 5.

In Figure 5a a process simply provides for a determination by the motion sensor that vibration occurs at stage 51. If the user then presses the button 22 this indicates that the associated machine is on. At stage 52, if the machine is on the procedure then follows that described above with regard to Figure 4 at stage 43. Alternatively, if vibration is detected and the machine is not on then an indication through the display 40 will be provided to suggest adjustment of the mountings at stage 53 and a determination of vibration by the machine repeated.

With regard to Figure 5b an inversion of the process as depicted in Figure 5a is provided. In such circumstances when the machine is switched on at stage 61 a determination of vibration is provided at stage 62. If a vibration is determined then the procedure as defined above with regard to Figure 4 occurs with respect to incrementing or initiating the timer (stage 43). If vibration is not detected but the machine is on then again a signal is provided in the display 40 to suggest adjusting the mounting for the vibration sensor at stage 63 until vibration is determined etc.

With regard to Figure 5c a procedure is provided whereby when a machine is determined as on at stage 71 vibration is determined at stage 72. If vibration is determined and the machine is on then as previously initiation of the timer or initiation of pulse counting occurs as with stage 43 depicted in Figure 4. If vibration is not determined but the machine is on then an indication through an icon in the display will be provided to suggest adjustment of the vibration sensor sensitivity at stage 73. The vibration sensor sensitivity itself may be adjusted through physical mountings for the motion sensor 30 as depicted in Figure 1 in terms of strapping down or otherwise.

By the above processes a feedback calibration approach can be taken with regard to adjusting vibration sensor sensitivity for a vibration characteristic of the machine with the possibility of eliminating spurious vibrations which could trigger a false timer or vibration pulse counting mechanism utilised to indicate maintenance or other scheduling. As described previously the timer through a threshold T or vibration counter through a count threshold T will enable display of an icon appropriate to machine or engine usage based upon characteristic vibration determination in accordance with procedures of aspects of the present invention.

As indicated above aspects of the present invention relate to attempting to provide characteristic vibration for a mounting of a monitor. By providing some shift or physical control of vibration transmission to the monitor device a simple vibration sensor or other motion sensor can be utilised without sophisticated electronic control adding to cost but avoiding excessive spurious results. As indicated with respect to relatively inexpensive machinery and equipment utilising an internal combustion engine or pneumatic or hydraulic or electric motor power great accuracy in terms of timing is not generally required. Thus, monitors in accordance with aspects of the present invention utilise generally physical adaptation in mountings for some improvement over a basic vibration sensor to improve response sufficiently for acceptability but not absolute accuracy.

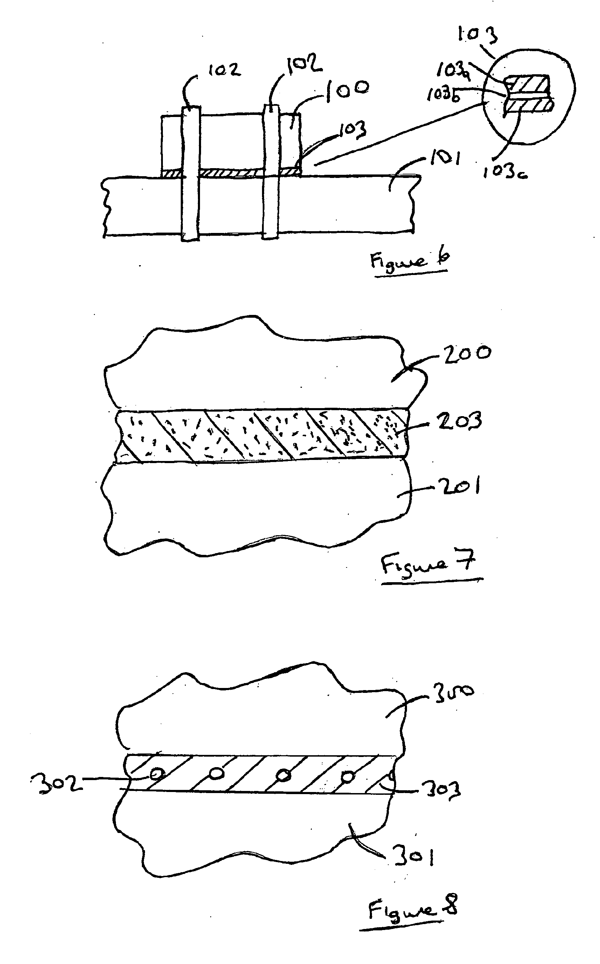

Figures 6 to 8 illustrate potential approaches to adjusting mountings for a monitoring device in accordance with aspects of the present invention.

In Figure 6 a monitoring device 100 is associated with a structure such as a handlebar 101 or casing part of a machine producing vibration. This vibration may be due to an internal combustion engine or other power source associated with a machine or otherwise. The monitor 100 is secured through straps 102 upon an intermediate layer 103. The intermediate layer 103 is generally a flexible elastomeric material such that through appropriate tensioning of the straps 102 the layer 103 can be compressed.

Being an elastomeric material the intermediate layer 103 will variously provide a dampener to the vibration transfer to the monitor 100. In such circumstances through an appropriate choice of the material, shape and other configurations of the layer 103 in relation to the compression provided by the straps 102 an adjustment in the vibration transfer to the monitor 100 can be achieved.

Advantageously the intermediate layer 103 comprises a slab of material directly below the monitor 100. This material may be of one substance or type or comprise several layers in a laminate to achieve different results. Thus, in the expanded section of the layer 103 as illustrated plates or flaps of material 103a, 103b, 103c are combined. These layers 103a, 103b, 103c will be secured together through an adhesive. This adhesive again may be used to vary vibration transfer characteristics and applied uniformly across the juxtaposed surfaces of the layers 103a, 103b, 103c or applied in patches in order to create different vibration transfer characteristics. It will also be appreciated that voids and cavities can be provided within the layer 103 or lateral/vertical non-compressible plates or pegs of material provided to again vary the vibration transfer characteristic across the layer 103.

In addition to providing a layer 103 it will be appreciated as an alternative stick on patches of material may be applied between the monitor 100 and the structure 101. These patches again may be compressible through tension provided in the straps to adjust vibration transfer characteristics.

In order to further adjust vibration transfer characteristics a sleeve or glove of shape memory sleeve may be applied as an over layer covering the monitor, any intermediate layer and structure 101 in order to again adjust the vibration transfer characteristics as perceived by the motion sensor within the monitor 100.

As indicated above vibration characteristic shift to avoid spurious results is advantageous. In such circumstances as depicted in Figure 7 a gap between a portion of a monitor 200 and part of a structure 201 may be filled with a foam or other layer 203 such that vibration is transferred across the material 203 to the monitor 200. This material 203 may be rendered vibration sensitive. In such circumstances the material 203 may age when subject to vibration. If the material 203 either becomes more flaccid or more stiff as a result of vibration it will be appreciated that a shift in vibration transfer characteristic will be provided. However, a degree of work hardening, whether that be softening or hardening of the material 203 will be limited by the characteristic vibration of the machine. If this characterisation of the material 203 appears whilst the machine is operational, that is to say the equipment subject to vibration is working the in situ conditioning of the material 203 will be a characteristic of that machine's operational function and therefore provide a vibration characterisation for the monitor 200 which can be utilised to diminish spurious vibration results.

One approach to work conditioning of material 203 is through providing micro-encapsulated adhesive within the material 203. In such circumstances when subject to vibration the micro-encapsulation of the adhesive will be broken and the adhesive exposed to a solvent or air in order harden and so adjust the responsivity of the material to vibration transfer to the monitor. This change in the vibration transfer characteristic of the material 203 as indicated can be utilised to provide adjustment of the motion sensor trigger values for a response signal initiating a timer operation or vibration count procedure.

Figure 8 provides a further illustration of an approach to adjusting the vibration characteristic as determined by a monitor 300 through a layer 303 utilised to provide a base upon which the monitor 300 is secured to a machine or engine 301. The layer 300 may be elastomeric or otherwise with apertures 302 extending laterally across the layer 300. Within these apertures 302 rods or inserts can be placed of varying materials in order to change the characteristic transfer of vibration across the layer 300 between the machine 301 and the monitor 300. These inserts may be plastic or metal or other materials in order to adjust the vibration transfer characteristic.

As outlined above generally a display of a monitor device in accordance with aspects of the present invention will incorporate a number of icons for particular service or operational functions or exposure times. The vibration or motion sensor utilised in the monitor in accordance with aspects of the present invention will have as indicated generally a rudimentary vibration sensor adapted through provision on a mounting and/or confirmation of the correct vibration sensitivity for a vibration characteristic to improve performance where spurious vibrations may occur. In such circumstances, the device in accordance with aspects of the present invention is particularly useful with regard to low usage lawn mowers, power tools and portable generators using internal combustion engines.

It is envisaged that in accordance with aspects of the present invention the monitor may be initially fitted to machines such as those including internal combustion engines or provided as a retrofit device. It will be appreciated with regard to retrofit devices choice of the position of the monitor and in particular the mounting can alter the vibration characteristic, In such circumstances in accordance with aspects of the present invention the monitor device will generally incorporate different means for securing the device dependent upon the location or positioning on the machine or engine. Furthermore, two or more monitors may be associated with the machine in order to provide respective vibration characteristic responses which can then be combined in a weighted or sampling process to again provide further limitations with regard to spurious vibrations causing actuation of a timer or vibration pulse counter. In such circumstances each monitoring device will be set for a particular vibration characteristic such that the possibility of all vibration monitoring devices being activated by spurious vibrations is further diminished so that an indicator will only be activated when all vibration sensors determine vibration responses from the machine or engine.

Modifications and alterations to aspects of the present invention will be appreciated by those skilled in the art. For example an expected time period for the vibration sensor may be compared with the measured time period. For example a user for the first monitoring period may be instructed to deliberately initiate a separate timer to determine periods of usage compared with the response from the machine. The user may press to initiate the timer when the machine is switched on and then press a stop button when the machine is switched off and the reading given as a base time period for comparison with the vibration response triggered and vibration pulse counting procedure expected for such a time period. Deviations may be corrected in the sensitivity of the vibration sensor or by adjustment in the mountings.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A monitoring device comprising a vibration sensor, a mounting and a control device, the vibration sensor positioned in use upon vibrating equipment using the mounting to provide a vibration characteristic for the equipment in use, the mounting configured to define a vibration conduit between the equipment and the vibration sensor, the vibration sensor providing a response signal indicative of vibrations above a threshold for the vibration characteristic, the control device including a memory and a processor, the memory defining a trigger value for an actuation trigger to a display and the processor arranged to monitor the response signals and compare with the trigger value such that the processor stimulates the actuation trigger to the display to provide an indicator.

2. A monitoring device as claimed in claim 1 wherein the vibration equipment is an engine or power tool (hydraulic or pneumatic or electric motor driven).

3. A device as claimed in claim1 or claim 2 wherein the trigger value relates to a length of time of usage.

4. A device as claimed in claim 3 wherein the length of time usage utilizes a trigger dependent upon the intensity of vibration at or above the vibration characteristic.

5. A device as claimed in any preceding claim wherein the processor is arranged to count the number of response signals representative of vibration above the threshold and the trigger value is an accumulative number of response signals.

6. A device as claimed in any preceding claim, wherein the indicator comprises an icon panel.

7. A device as claimed in any preceding claim wherein the memory defines a plurality of trigger values and the display operates an indicator for each trigger value.

8. A device as claimed in any preceding claim wherein the mounting and/or vibration sensor includes means for adjusting vibration sensitivity.

9. A device as claimed in any preceding claim wherein the control device is associated with a calibration feature whereby the vibration characteristic is set when a machine associated with the monitoring device is operational.

10. A device as claimed in any preceding claim wherein the trigger value can be chosen for levels of expected service.

11. A device as claimed in any preceding claim wherein the mounting includes an elastic damping layer.

12. A device as claimed in any preceding claim wherein the mounting is specifically variable in order to alter the vibration characteristic to set a threshold for the vibration sensor specific to the monitoring device installation.

13. A device as claimed in any preceding claim wherein the mounting is variable by insertion or by removal of insert elements for incorporation of microencapsulated adhesive released by vibration of the mounting or the mounting comprises frangible elements and/or variable compressibility and/or shaping in situ or by provision of straps to vary the proximity of the vibration sensor to the equipment or a glove or sleeve to envelope the mounting device provides variation in the vibration characteristic.

14. A monitoring device comprising a vibration sensor, a mounting and a control device, the vibration sensor positioned in use above a machine using the mounting to provide a vibration characteristic for the machine in use, the mounting configured to define a vibration conduit between the machine and the vibration sensor, the vibration sensor providing a response signal to a timer, the operation sensor arranged to preferentially detect vibrations with the vibration characteristic for the machine and provide the response signal to the timing device whereby the time the machine is in use is determined, the mounting adjustable to vary the vibration characteristic as determined by the vibration sensor to ensure the vibration sensor predominantly determines vibrations with the vibration characteristic in order to provide the response signal.

15. A device as claimed in claim 14 wherein the vibration sensor incorporates a filter and simply acts when receiving, vibrations with the vibration characteristic determined by the mounting.
